(19) Europäisches Patentamt
European Patent Office
Office européen des brevets

(11) EP 1 434 806 B1

(12) **EUROPÄISCHE PATENTSCHRIFT**

(45) Veröffentlichungstag und Bekanntmachung des Hinweises auf die Patenterteilung:
**14.06.2006 Patentblatt 2006/24**

(21) Anmeldenummer: **02779444.5**

(22) Anmeldetag: **30.09.2002**

(51) Int Cl.:
***C08F 212/08*** (2006.01) ***C08F 236/06*** (2006.01)
***C08F 291/00*** (2006.01) ***D21H 17/35*** (2006.01)

(86) Internationale Anmeldenummer:
**PCT/EP2002/010969**

(87) Internationale Veröffentlichungsnummer:
**WO 2003/029316 (10.04.2003 Gazette 2003/15)**

(54) **VERFAHREN ZUR HERSTELLUNG WÄSSRIGER STYROL-BUTADIEN-POLYMERDISPERSIONEN**

METHOD FOR PRODUCING AQUEOUS STYRENE-BUTADIENE-IV POLYMER DISPERSIONS

PROCEDE POUR PRODUIRE DES DISPERSIONS AQUEUSES DE POLYMERES STYRENE-BUTADIENE - IV

(84) Benannte Vertragsstaaten:
**AT BE BG CH CY CZ DE DK EE ES FI FR GB GR IE IT LI LU MC NL PT SE SK TR**

(30) Priorität: **01.10.2001 DE 10148511**

(43) Veröffentlichungstag der Anmeldung:
**07.07.2004 Patentblatt 2004/28**

(73) Patentinhaber: **BASF Aktiengesellschaft**
**67056 Ludwigshafen (DE)**

(72) Erfinder:
- **GASCHLER, Wolfgang**
  **69126 Heidelberg (DE)**
- **SCHÄDLER, Volker**
  **67000 Strassburg (FR)**
- **MANDERS, Lambertus**
  **67069 Ludwigshafen (DE)**
- **WIRTH, Thomas**
  **67251 Freinsheim (DE)**
- **KRÖNER, Hubertus**
  **67435 Neustadt (DE)**

(74) Vertreter: **Reitstötter - Kinzebach**
**Ludwigsplatz 4**
**67059 Ludwigshafen (DE)**

(56) Entgegenhaltungen:
**EP-A- 0 016 403**
**EP-A- 0 407 059**
**EP-A- 0 666 274**
**US-A- 5 703 157**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 434 806 B1

## Beschreibung

Die vorliegende Erfindung betrifft ein Verfahren zur Herstellung einer wässrigen Styrol-Butadien-Polymerdispersion durch radikalische, wässrige Emulsionspolymerisation einer Styrol- und Butadien-enthaltenden Monomermischung nach einem Monomerzulaufverfahren. Die Erfindung betrifft auch die nach diesem Verfahren erhältlichen Styrol-Butadien-Polymerdispersionen sowie deren Verwendung als Bindemittel in Papierstreichfarben.

Papiere und Karton werden zur Verbesserung ihrer Bedruckbarkeit und ihrer optischen Eigenschaften wie Glanz, Weiße und Opazität häufig bei ihrer Herstellung mit einer pigmenthaltigen Beschichtung versehen. Die hierbei verwendeten Beschichtungsmassen, die auch als Papierstreichfarben bezeichnet werden, enthalten neben dem Pigment auch ein Bindemittel, welches dazu dient, die einzelnen Pigmentteilchen untereinander und auf der Papieroberfläche zu verankern und somit eine geschlossene Pigmentschicht zu bilden.

Beschichtet, d.h. gestrichen werden insbesondere graphische Papiere und Kartons, die bedruckt werden sollen. Gestrichen werden außerdem Spezialpapiere wie Etiketten, Tapeten und nicht bedruckte Silikonpapiere, die als Träger für Selbstklebeetiketten verwendet werden.

Obwohl das Bindemittel in den Papierstreichmassen in der Regel nur in einer Menge von bis zu 30 Gew.-Teilen auf 100 Gew.-Teile Pigment enthalten ist, beeinflußt es doch maßgeblich die Eigenschaften des Papiers, insbesondere die Druckperformance und das Erscheinungsbild. Für die Druckperformance sind beispielsweise die Glätte, die Blisterfreiheit, die Kompressibilität sowie das Absorptionsverhalten gegenüber Flüssigkeiten, beispielsweise Druckfarben oder Wischwasser, wichtig. Ein wichtiges Kriterium ist auch die Stabilität der Beschichtung gegenüber mechanischen Beanspruchungen. Insbesondere beim Offset-Druck muß eine hohe mechanische Stabilität gewährleistet sein, da die Oberfläche aufgrund der Zügigkeit (Tack) der verwendeten Druckfarben mechanisch sehr stark beansprucht wird. Aufgrund des beim Offset-Druck verwendeten Wischwassers muß diese mechanische Festigkeit auch im feuchten Zustand gewährleistet sein. Die mechanische Belastbarkeit einer Papierbeschichtung wird auch als Rupffestigkeit, die mechanische Belastbarkeit im feuchten Zustand auch als Naßrupffestigkeit bezeichnet.

Die Rupffestigkeit der Papierbeschichtungen gewinnt zunehmend an Bedeutung, da die in den letzten Jahren stark angestiegenen Druckgeschwindigkeiten eine zunehmende mechanische Belastung der Papieroberfläche zur Folge haben. Aufgrund dessen werden die als Bindemittel im Stand der Technik verwendeten wässrigen Polymerisatdispersionen in zunehmend höheren Gewichtsanteilen in der Beschichtung eingesetzt. Dies hat jedoch eine unerwünschte Kostensteigerung der Einsatzmaterialien für die Papierbeschichtung zur Konsequenz. Außerdem verändert der erhöhte Bindemittelanteil die optischen Eigenschaften und die Bedruckbarkeit des Papiers in nachteiliger Weise. So führt der erhöhte Bindemittelanteil zu einem verlangsamten Wegschlagverhalten der Druckfarbe, was unter anderem zum Abliegen der Druckfarbe im Stapel führen kann.

Die EP-A 407 059 beschreibt ein Verfahren zur Herstellung Butadien-haltiger Copolymer-Latices mit einem Gelanteil von wenigstens 5%, die in Gegenwart von Kettenübertragungsmitteln hergestellt wurden. Als Kettenübertragungsmittel werden unter anderem Mischungen aus Terpen-Kohlenwasserstoffen und schwefelhaltigen Kettenübertragungsmitteln genannt. Die dort beschriebenen Latices können als Bindemittel in Papierbeschichtungsmitteln eingesetzt werden.

Aus der DE 195 12 999 sind Papierbeschichtungsmittel bekannt, die als Bindemittel einen mehrphasigen Styrol-Butadien-Copolymerlatex enthalten, dessen Polymerisat zwei Glasumwandlungspunkte aufweist, welche wenigstens 5 K voneinander verschieden sind. Die Herstellung erfolgt in der Regel durch Emulsionspolymerisation der zu polymerisierenden Monomere in Gegenwart von Kettenübertragungsmitteln. Als Kettenübertragungsmittel werden unter anderem Alkylmercaptane und Kohlenwasserstoffe wie Terpinolen oder $\alpha$-Methylstyrol-Dimer verwendet. Die Herstellung mehrphasiger Polymere ist jedoch mit einem zusätzlichen Aufwand verbunden.

Die deutsche Patentanmeldung P 100 46 930.2 beschreibt die Herstellung von im wesentlichen einphasigen Styrol-Butadien-Latices, die durch Emulsionspolymerisation in Gegenwart einer Mischung aus Schwefelhaltiger Verbindung und Terpinolen als Regler (Kettenübertragungsmittel) hergestellt wurden, wobei der Regler der Polymerisationsreaktion in ihrem Verlauf zugeführt wurde.

Die im Stand der Technik beschriebenen Butadien-Styrol-Latices vermögen häufig die Anforderungen an die Rupffestigkeit, insbesondere an die Naßrupffestigkeit nicht im gewünschten Umfang zu erfüllen. Die im Stand der Technik vorgeschlagene Verwendung von Terpinolen als Polymerisationsregler führt unter den dort angegebenen Bedingungen ebenfalls nicht zu zufriedenstellenden Produkten. Außerdem ist der Restmonomergehalt z.T. nicht zufriedenstellend.

Der vorliegenden Erfindung liegt somit die Aufgabe zugrunde, einen Polymerlatex bereitzustellen, der einfach herzustellen ist und bereits bei geringen Einsatzmengen in Papierstreichmassen zu Papierbeschichtungen mit hoher Trocken- und Naßrupffestigkeit führt.

Es wurde überraschenderweise gefunden, dass diese Aufgabe durch einen Styrol-Butadien-Polymerlatex gelöst wird, der durch radikalische wässrige Emulsionspolymerisation einer Styrol- und Butadien-haltigen Monomermischung nach einem Monomerzulaufverfahren in Gegenwart eines Reglersystems hergestellt wurde, das bezogen auf 100 Gew.-% Monomere,

- 0,02 bis 0,5 Gew.-% wenigstens eines Kohlenwasserstoffs KW mit 6 bis 20 C-Atomen, der ausgewählt ist unter Verbindungen, die bei Abstraktion eines Wasserstoffatoms ein Pentadienyl- oder ein 1-Phenylallyl-Radikal bilden, und α-Methylstyrol-Dimer, sowie
- 0,3 bis 2 Gew.-% einer organischen Verbindung S mit wenigstens einer SH-Gruppe

umfasst, und das dadurch gekennzeichnet ist, daß man wenigstens 30 %, vorzugsweise wenigstens 50 %, insbesondere wenigstens 80 % und besonders bevorzugt die Gesamtmenge (bzw. >95 %) an Kohlenwasserstoff KW im Polymerisationsgefäß vorlegt.

Demnach betrifft die vorliegende Erfindung ein Verfahren zur Herstellung einer wässrigen Styrol-Butadien-Polymerdispersion durch radikalische wässrige Emulsionspolymerisation einer Monomermischung M, enthaltend

- Styrol,
- Butadien und gegebenenfalls
- bis 30 Gew.-%, bezogen auf 100 Gew.-% Monomere M, von Styrol und Butadien verschiedene ethylenisch ungesättigte Comonomere;

nach einem Monomerzulaufverfahren, das dadurch gekennzeichnet ist, dass man das vorstehend beschriebene Reglersystem in der oben beschriebenen Weise zuführt.

Die organische Verbindung S kann grundsätzlich im Polymerisationsgefäß vorgelegt werden. Vorzugsweise wird jedoch die Hauptmenge, insbesondere wenigstens 70 %, besonders bevorzugt wenigstens 90 % und insbesondere die Gesamtmenge der organischen Verbindung S der Polymerisationsreaktion in ihrem Verlauf zugeführt. Bevorzugt erfolgt die Zugabe der Hauptmenge der Verbindung S und insbesondere die Gesamtmenge der Verbindung S parallel zur Monomerzugabe, insbesondere im Monomerzulauf.

Die nach dem Verfahren erhältlichen Polymerdispersionen zeichnen sich durch einen geringen Koagulat-Anteil, eine hohe mechanische Stabilität und einen geringen Restmonomergehalt aus. Außerdem lassen sich mit diesen Dispersionen Papierstreichmassen herstellen, die auch bei geringen Bindemittelanteilen den Papierstreichmassen des Standes der Technik hinsichtlich der Rupffestigkeit, insbesondere der Naßrupffestigkeit überlegen sind. Die nach dem erfindungsgemäßen Verfahren erhältlichen Polymerdispersionen sind daher ebenfalls Gegenstand der vorliegenden Erfindung.

Das erfindungsgemäße Reglersystem umfasst vorzugsweise 0,05 bis 0,4 Gew.-% und insbesondere 0,1 bis 0,3 Gew.-% wenigstens eines Kohlenwasserstoff KW und vorzugsweise 0,5 bis 1,8 und insbesondere 0,7 bis 1,5 Gew.-% wenigstens einer organischen Verbindung S mit wenigstens einer SH-Gruppe. In der Regel beträgt das Gewichtsverhältnis von Terpinolen zu Verbindungen S wenigstens 1:100, vorzugsweise wenigstens 1:50 und insbesondere wenigstens 1:10. Es beträgt höchstens 1:1,25, insbesondere höchstens 1:1,5 und besonders bevorzugt höchstens 1:2.

Bevorzugte Verbindungen S sind in den hydrophoben Monomeren Styrol und Butadien löslich. Insbesondere sind sie ausgewählt unter $C_4$-$C_{18}$-Alkylmercaptanen wie n-Hexylmercaptan, n-Octylmercaptan, tert.-Octylmercaptan, n-Decylmercaptan, n-Dodecylmercaptan, tert.-Dodecylmercaptan, n-Hexadecylmercaptan und Stearylmercaptan.

Geeignete Kohlenwasserstoffe KW sind neben dem α-Methylstyrol-Dimer alle jene Verbindungen, die bei Abstraktion eines Wasserstoffatoms ein Pentadienyl- oder ein 1-Phenylallyl-Radikal ausbilden. Hierbei handelt es sich um Verbindungen, die

- entweder eine 1,4-Pentadienstruktur mit einem oder zwei Wasserstoffatomen am C3-Atom (Struktur A):

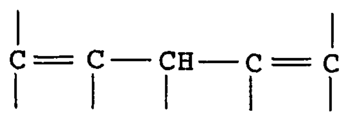

(A)

- oder eine 1,3-Pentadienstruktur mit einem oder zwei Wasserstoffatomen am C5-Atom (Struktur B) aufweisen,

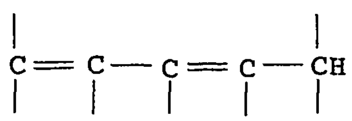

(B)

wobei eine der Doppelbindungen auch Bestandteil eines Phenylringes sein kann. In den Strukturen A und B deuten die

senkrechten Striche offene Valenzen an, ohne jedoch eine Aussage über die Stereochemie der Doppelbindungen zu treffen. Die offenen Valenzen können mit Wasserstoff, einer Alkylgruppe oder einer Phenylgruppe abgesättigt sein oder es können je 2 offene Valenzen einen 5-oder 6-gliedrigen Carbocyclus bilden. Valenzen an zwei über eine Doppelbindung miteinander verbunden C-Atomen können zusammen mit den C-Atomen der Doppelbindung für einen Phenylring stehen.

Beispiele für Verbindungen mit der Struktur A sind 1,4-Dihydrobenzol, γ-Terpinen, Terpinolen und Norbornadien sowie weiterhin α-Ionon. Beispiele für Kohlenwasserstoffe mit Struktur B sind 1,3-Cyclohexadien, α-Terpinen und α-Phellandren. Der Begriff Kohlenwasserstoff KW umfasst auch Kohlenwasserstoffketone und Kohlenwasserstoffalkohole, die unter Wasserabspaltung eine Struktur A oder B ausbilden. Bevorzugte Kohlenwasserstoffregler sind γ-Terpinen, Terpinolen und α-Methylstyrol-Dimer, insbesondere Terpinolen.

Der Begriff "Monomerzulaufverfahren" ist im Stand der Technik gebräuchlich und bezeichnet im Unterschied zum "Batch-Verfahren" ein Polymerisationsverfahren, bei dem man die zu polymerisierenden Monomere nicht vollständig im Reaktonsgefäß vorlegt sondern bei dem man die Hauptmenge, üblicherweise wenigstens 70 %, vorzugsweise wenigstens 80 % und insbesondere wenigstens 90 % oder die Gesamtmenge der insgesamt zu polymerisierenden Monomere über einen definierten Zeitraum der Polymerisationsreaktion unter Polymerisationsbedingungen zuführt. Unter dem Begriff Polymerisationsbedingungen versteht der Fachmann, dass der Polymerisationsreaktor eine zur Initiierung der Polymerisationsreaktion ausreichende Menge an Initiator enthält und der Reaktorinhalt eine Temperatur aufweist, bei welcher der Initiator eine zur Initiierung der Polymerisation ausreichende Zerfallsgeschwindigkeit aufweist. Die Zusammenhänge zwischen Temperatur und Zerfallsgeschwindigkeit sind dem Fachmann für die gängigen Polymerisationsinitiatoren hinreichend bekannt oder können in Routineexperimenten ermittelt werden.

Konzentrationsangaben in Monomerzuläufen beziehen sich hier und im Folgenden, sofern nichts anderes angegeben wird, auf die aktuelle Konzentration einer Komponente im Zulauf zum Zeitpunkt ihrer Zugabe. Angaben zu Monomerkonzentrationen in Gew.-% beziehen sich dabei auf die Gesamtmenge der zum fraglichen Zeitpunkt, bzw. im fraglichen Zeitintervall zugeführten Monomere. Demgegenüber beziehen sich Bruttoangaben auf die Gesamtmenge einer Komponente, die über die gesamte Dauer eines Zulaufs zugegeben wird. Sofern nichts anderes angegeben wird, ist unter dem Monomerzulauf die Summe aller Monomerzuläufe zu verstehen.

Zur Verringerung des Gehalts an restflüchtigen Bestandteilen hat es sich als vorteilhaft erwiesen, die Monomere möglichst rasch der Polymerisationsreaktion zuzuführen. Vorzugsweise führt man die zu polymerisierenden Monomere innerhalb von maximal 8 h, insbesondere innerhalb von 2 bis 6 h, besonderes bevorzugt innerhalb von 2,5 bis 5 h der Polymerisationsreaktion zu.

In einer bevorzugten Ausführungsform der Erfindung wird man zu einem Zeitpunkt, wenn wenigstens 70 % der zu polymerisierenden Monomere der Polymerisationsreaktion zugeführt worden sind, die Konzentration des Butadiens im Monomerzulauf für einen Zeitraum von wenigstens 1 % der Gesamtzulaufdauer um wenigstens 10 Gew.-%, vorzugsweise um wenistens 15 Gew.-%, z.B. um 10 bis 40 Gew.-% und insbesondere um 15 bis 30 Gew.-%, bezogen auf Monomere im Zulauf, anheben.

In der Regel beträgt das Zeitintervall, in welchem der Monomerzulauf eine erhöhte Butadienkonzentration aufweist, wenigstens 1 % und insbesondere wenigstens 2 % der Gesamtdauer des Monomerzulaufs und wird vorzugsweise eine Dauer von 20 %, insbesondere von 10 % nicht überschreiten und z.B. 1 bis 20 %, insbesondere 2 bis 10 % der Gesamtdauer des Monomerzulaufs betragen.

Vorzugsweise hebt man die Konzentration des Butadiens im Monomerzulauf auf wenigstens 50 Gew.-%, insbesondere auf wenigstens 55 Gew.-% an. Dementsprechend beträgt die Styrolkonzentration während dieses Zeitraums vorzugsweise nicht mehr als 50 Gew.-% und besonders bevorzugt nicht mehr als 45 Gew.-%.

Vorzugsweise erfolgt die Änderung der Zulaufzusammensetzung, wenn wenigstens 75 % und insbesondere wenigstens 80 % und vorzugsweise bevor 99 %, insbesondere bevor 95 % und besonders bevorzugt bevor 90 % der zu polymerisierenden Monomere der Polymerisationsreaktion zugeführt worden sind.

Die Änderung der Zusammensetzung im Monomerzulauf kann kontinuierlich oder stufenweise in einem oder in mehreren, z.B. in 2, 3, 4, 5 oder 6 Schritten auf einen Endwert erfolgen oder innerhalb eines begrenzten Zeitintervalls, das vor Beendigung der Monomerzugabe endet.

Die Änderung der Zusammensetzung des Monomerzulaufs kann in unterschiedlicher Weise gesteuert werden. Beispielsweise kann man Butadien und Styrol über getrennte Monomerzuläufe der Polymerisationsreaktion zuführen. Oder man führt eine Teilmenge einer Monomersorte, z.B. eine Teilmenge Butadien, über einen von der Restmenge der Monomere getrennten Zulauf der Polymerisationsreaktion zu. Eine Änderung der relativen Zulaufrate der Monomerzuläufe bewirkt dann in einfacher Weise eine Änderung der Bruttozusammensetzung des Monomerzulaufs. Selbstverständlich kann man die Monomere M1 und M2 und gegebenenfalls M3 auch über einen gemeinsamen Zulauf der Polymerisationsreaktion zuführen und die aktuelle Zusammensetzung des Zulaufs über geeignete Mischvorrichtungen, die ein kontinuierliches Mischen von Fluidströmen ermöglichen, voreinstellen. Geeignet sind dabei insbesondere statische Mischer.

In einer bevorzugten Ausführungsform A verringert man gegen Ende der Monomerzugabe die Zufuhrrate des Styrol-haltigen Monomerzulaufs bei konstanter Rate der Butadienzufuhr, und zwar vorzugsweise derart, dass der Anteil

des Styrols im Monomerzulauf zum Zeitpunkt der Beendigung der Monomerzugabe weniger als 40 Gew.-%, insbesondere weniger als 20 Gew.-% und speziell 0 Gew.-% beträgt. Vorzugsweise erfolgt die Änderung, wenn 80%, insbesondere wenn 90 bis 99,5 % und besonders bevorzugt wenn 95 bis 99 % der Monomere zugeführt worden sind. In besonders einfacher Weise gelingt dies durch Beendigung der Styrolzufuhr bevor die Butadienzufuhr beendet ist, insbesondere wenn 90 bis 99,5 Gew.-% und besonders bevorzugt wenn 95 bis 99 Gew.-% des insgesamt zu polymerisierenden Butadiens zugeführt worden sind.

Umgekehrt kann man bei konstanter Rate der Styrolzugabe gegen Ende der Monomerzugabe die Rate der Butadienzufuhr auf einen Endwert oder zumindest in einem begrenzten Zeitintervall erhöhen (Ausführungsform B). Auch kann man beide Maßnahmen miteinander kombinieren. Hinsichtlich der Dauer der Phase erhöhter Butadienzufuhrrate gilt das oben gesagte.

Besonders bevorzugt ist als Sonderform der Ausführungsform B eine Ausführungsform B', bei der man eine Monomermischung, umfassend Styrol und Butadien und gegebenenfalls Monomere M3 in näherungsweise konstanter Monomerzusammensetzung, der Polymerisationsreaktion als Monomerzulauf Mz1 zuführt, wobei der Anteil des Butadiens in der Bruttozusammensetzung von Mz1 um 0,5 bis 20 Gew.-%, bezogen auf die Gesamtbutadienmenge in der zu polymerisierenden Monomerzusammensetzung verringert ist. Wenn wenigstens 70 %, vorzugsweise wenn 75 bis 99 % und insbesondere wenn 80 bis 95 % des Monomerzulaufs Mz1 der Polymerisationsreaktion zugeführt worden sind gibt man dann 0,5 bis 20 Gew.-%, vorzugsweise 1 bis 10 Gew.-% und insbesondere 2 bis 5 Gew.-% Butadien, bezogen auf die Gesamtmenge des insgesamt zu polymerisierenden Butadiens, als Zulauf Mz2 parallel mit der Restmenge des Monomerzulaufs Mz1 zur Polymerisationsreaktion. Zulauf Mz2 wird vorzugsweise weniger als 5 Gew.-% von Butadien verschiedene Monomere M2 und/oder M3 enthalten. Insbesondere enthält Zulauf Mz2 Butadien als alleiniges Monomer. Die Zugabe von Mz2 kann beginnend bei dem obengenannten Zeitpunkt bis zum Ende der Polymerisationsreaktion oder innerhalb eines kurzen Intervalls erfolgen. Die Gesamtdauer von Zulauf Mz2 beträgt vorzugsweise 1 bis 20 % und insbesondere 2 bis 10 % der Gesamtdauer von Mz1. Die Zuläufe Mz1 und Mz2 sind dabei als Stoffströme zu verstehen. Mz1 und Mz2 können sowohl über getrennte Einlässe in den Polymerisationsreaktor geführt werden. Ebenfalls ist es möglich, die den Stoffströmen Mz1 und Mz2 entsprechenden Monomermengen unter Verwendung geeigneter Mischvorrichtungen mittels einer gemeinsamen Zuleitung in den Reaktor zu führen.

Die Zugabe der Monomere kann sowohl in Form einer Mischung der Monomere als solche, als auch in Form einer wässrigen Emulsion der Monomere M1 bis M3 erfolgen, wobei letztere Vorgehensweise in der Regel bevorzugt wird. In der Ausführungsform B' wird man häufig den Butadien-reichen Zulauf Mz2 als reines Monomer bzw. Monomermischung und den Zulauf Mz1 als wässrige Emulsion der Polymerisationsreaktion zuführen.

Sofern man die Monomere der Polymerisationsreaktion als wässrige Emulsion zuführt, beträgt der Monomeranteil üblicherweise 30 bis 90 Gew.-%, insbesondere 40 bis 80 Gew.-% des Gesamtgewichts der Emulsion. Daneben enthält die Monomeremulsion in der Regel wenigstens einen Teil, vorzugsweise wenigstens 70 Gew.-%, insbesondere wenigstens 80 Gew.-% oder die Gesamtmenge der für eine Emulsionspolymerisation üblicherweise benötigten oberflächenaktiven Verbindungen.

Bei den resultierenden Polymerisaten tritt auch bei Veränderung der Monomerzusammensetzung in der beschriebenen Weise keine Mehrphasigkeit auf, die sich beispielsweise durch mehrere Glasübergangstemperaturen im DSC des Polymeren manifestieren würde.

Für das erfindungsgemäße Verfahren sind grundsätzlich die für eine radikalische wässrige Emulsionspolymerisation bekannten Initiatorsysteme geeignet. Bevorzugte Initiatoren sind wasserlöslich. Insbesondere bevorzugt sind solche Initiatoren, die eine Peroxidgruppe aufweisen wie anorganische und organische Peroxide und Hydroperoxide. Besonders bevorzugt sind Wasserstoffperoxid und die Salze der Peroxodischwefelsäure, z.B. Natriumperoxodisulfat. Geeignet sind auch organische Hydroperoxide wie tert.-Butylhydroperoxid und Cumolhydroperoxid. Teilweise hat es sich bewährt, die vorgenannten Peroxide zusammen mit einem Reduktionsmittel und/oder einer Metallverbindung, die ihre Wertigkeitsstufe ändern kann, einzusetzen.

Geeignete Reduktionsmittel sind Ascorbinsäure, Hydroxymethansulfinsäure, das Bisulfitaddukt von Aceton, Natriumsulfit oder -hydrogensulfit. Beispiele für geeignete Metallverbindungen sind die Salze und wasserlöslichen Komplexe des Eisens, Vanadiums oder des Kupfers. Üblicherweise wird der Radikalstarter in einer Menge von 0,1 bis 3 Gew.-%, bezogen auf die zu polymerisierenden Monomere eingesetzt.

Die Polymerisationstemperatur hängt naturgemäß von der Zerfallscharakteristik des Polymerisationsinitiators ab und beträgt vorzugsweise wenigstens 60°C, insbesondere wenigstens 70°C, besonders bevorzugt wenigstens 80°C und ganz besonders bevorzugt wenigstens 90°C. Üblicherweise wird man eine Polymerisationstemperatur von 120°C und vorzugsweise 110°C nicht überschreiten, um aufwendige Druckapperaturen zu vermeiden.

Zur Erreichung eines geringen Restmonomergehalts hat es sich als vorteilhaft erwiesen, wenn man während der Polymerisation das Reaktionsgemisch einer intensiven Durchmischung unterwirft. Eine intensive Durchmischung kann man beispielsweise durch Einsatz von speziellen Rührern in Verbindung mit hohen Rührgeschwindigkeiten, durch Kombination von Rührern mit Statoren oder durch rasches Umwälzen, z.B. Umpumpen, der Reaktionsmischung über einen Bypass erreichen, wobei der Bypass seinerseits mit Vorrichtungen zur Erzeugung von Scherkräften, z.B. festen

Einbauten wie Scher- oder Lochblechen, ausgestattet sein kann. Unter speziellen Rührern werden solche Rührer verstanden, die neben einer tangentialen Strömungskomponente auch ein axiales Strömungsfeld erzeugen. Derartige Rührer sind z.B. in der DE-A 197 11 022 beschrieben. Bevorzugt sind insbesondere Mehrstufenrührer. Beispiele für spezielle Rührer zur Erzeugung tangentialer und axialer Strömungskomponenten sind Kreuzbalkenrührer, MIG®- und INTERMIG®-Rührer (Mehrstufen-Impuls-Gegenstromrührer und Interferenz-Mehrstufen-Impuls-Gegenstromrührer der Fa. EKATO), Axialflussturbinenrührer, wobei die vorgenannten Rührer einstufig oder mehrstufig aufgebaut und mit konventionellen Rührern kombiniert sein können, weiterhin Wendelrührer, vorzugsweise in wandgängiger Ausführung, Koaxialrührer, die einen ankerförmigen wandgängigen Rührer und einen ein- oder mehrstufigen, schnelllaufenden Zentralrührer aufweisen, sowie Mehrfachblattrührer. Geeignet sind weiterhin die in der DE-C1 4421949, JP-A 292002, WO 93/22350 beschriebenen Rührertypen.

In der Regel erfolgt die radikalische wässrige Emulsionpolymerisation in Gegenwart oberflächenaktiver Verbindungen. Unter oberflächenaktiven Verbindungen versteht man sowohl Emulgatoren als auch Schutzkolloide, die im Unterschied zu den Emulgatoren in der Regel ein Molekulargewicht oberhalb 2000 Dalton aufweisen und die wasserlöslich sind. Die oberflächenaktiven Substanzen können zusammen mit den Monomeren, beispielsweise in Form einer wässrigen Monomeremulsion zugeführt werden. Selbstverständlich kann man auch einen Teil oder die Gesamtmenge der oberflächenaktiven Substanzen im Polymerisationsgefäß vorlegen.

Bevorzugte Emulgatoren sind anionische und nichtionische Emulgatoren, die in der Regel in Mengen von 0,2 bis 10 Gew.-%, vorzugsweise 0,5 bis 5 Gew.-%, bezogen auf das Polymerisat in der Dispersion bzw. auf die zu polymerisierenden Monomere M eingesetzt werden.

Zu den anionischen Emulgatoren zählen Alkali- und Ammoniumsalze von Alkylsulfaten (Alkylrest: $C_8$-$C_{20}$), von Schwefelsäurehalbestern ethoxylierter Alkanole (EO-Grad: 2 bis 50, Alkylrest: $C_8$ bis $C_{20}$) und ethoxylierter Alkylphenole (EO-Grad: 3 bis 50, Alkylrest: $C_4$-$C_{20}$), von Alkylsulfonsäuren (Alkylrest: $C_8$ bis $C_{20}$) und von Alkylarylsulfonsäuren (Alkylrest: $C_4$-$C_{20}$). Weitere geeignete anionische Emulgatoren finden sich in Houben-Weyl, Methoden der organischen Chemie, Band XIV/1, Makromolekulare Stoffe, Georg-Thieme-Verlag, Stuttgart, 1961, S. 192-208.

Zu den anionischen grenzflächenaktiven Substanzen zählen auch Verbindungen der allgemeinen Formel I,

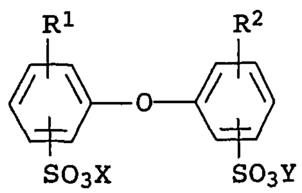

(I)

worin $R^1$ und $R^2$ Wasserstoff oder lineare oder verzweigte Alkylreste mit 6 bis 18 C-Atomen und insbesondere mit 6, 12 und 16 C-Atomen bedeuten, wobei $R^1$ und $R^2$ nicht beide gleichzeitig Wasserstoff sind. X und Y sind bevorzugt Natrium, Kalium oder Ammonium, wobei Natrium besonders bevorzugt ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen I sind allgemein bekannt, z. B. aus der US-A-4,269,749.

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger Alkohole (EO-Grad: 3 bis 50, Alkylrest: $C_8$-$C_{36}$), sowie Polyethylenoxid/Polypropylenoxid-Blockcopolymere. Bevorzugt werden Ethoxylate langkettiger Alkanole (Alkylrest: $C_{10}$-$C_{22}$, mittlerer Ethoxylierungsgrad: 3 bis 50) und darunter besonders bevorzugt solche auf Basis von Oxoalkoholen und nativen Alkoholen mit einem linearen oder verzweigten $C_{12}$-$C_{18}$-Alkylrest und einem Ethoxylierungsgrad von 8 bis 50.

Bevorzugt werden im erfindungsgemäßen Verfahren anionische Emulgatoren oder Kombinationen aus wenigstens einem anionischen und einem nichtionischen Emulgator eingesetzt.

Geeignete Schutzkolloide sind beispielsweise Polyvinylalkohole, Stärke- und Cellulosederivate, Carboxylgruppen enthaltende Polymere wie Homo- und Copolymere der Acrylsäure und/oder der Methacrylsäure mit Comonomeren wie Styrol, Olefinen oder Hydroxyalkylestern, oder Vinylpyrrolidon enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420. Auch Gemische aus Emulgatoren und/oder Schutzkolloiden können verwendet werden.

Im Hinblick auf die Verwendung als Bindemittel in Papierstreichmassen enthalten die zu polymerisierenden Monomermischungen neben 20 bis 80 Gew.-% insbesondere 40 bis 70 Gew.-% Styrol und 20 bis 80 Gew.-%, insbesondere 30 bis 55 Gew.-% Butadien, bis zu 30 Gew.-%, vorzugsweise bis zu 20 Gew.-% und insbesondere bis zu 10 Gew.-%, z.B. 0,5 bis 20 oder 1 bis 10 Gew.-% von Styrol und Butadien verschiedene ethylenisch ungesättigte Comonomere. Beispiele für Comonomere sind:

- monoethylenisch ungesättigte Monomere mit Säuregruppe wie Mono- und Dicarbonsäuren mit 3 bis 10 C-Atomen wie Acrylsäure, Methacrylsäure, Crotonsäure, Acrylamidoglykolsäure, Vinylessigsäure, Maleinsäure, Itaconsäure und die Halbester der Maleinsäure mit $C_1$-$C_4$-Alkanolen, ethylenisch ungesättigte Sulfonsäuren wie Vinylsulfonsäure, Allylsulfonsäure, Styrolsulfonsäure, 2-Acrylamidomethylpropansulfonsäure, und ethylenisch ungesättigte Phosphonsäuren, z.B. Vinylphosphonsäure, Allylphosphonsäure, Styrolphosphonsäure und 2-Acrylamido-2-Methylpropanphosphonsäure und ihre wasserlöslichen Salze, beispielsweise ihre Alkalimetallsalze, vorzugsweise Acrylsäure und Methacrylsäure. Derartige Monomere können in den Monomeren M in einer Menge von bis zu 10 Gew.-%, z.B. 0,1 bis 10 Gew.-%, vorzugsweise 0,1 bis 4 Gew.-%, enthalten sein;

- Amide monoethylenisch ungesättigter Carbonsäuren, wie Acrylamid und Methacrylamid, sowie die N-(Hydroxy-$C_1$-$C_4$-alkyl)amide, vorzugsweise die N-Methylolamide ethylenisch ungesättigter Carbonsäuren, wie N-Methylolacrylamid und N-Methylolmethacrylamid. Derartige Monomere können in den Monomeren M in einer Menge von bis zu 10 Gew.-%, z.B. 0,1 bis 10 Gew.-%, vorzugsweise 0,1 bis 4 Gew.-%, enthalten sein;

- Hydroxyalkylester monoethylenisch ungesättigter Carbonsäuren, insbesondere Hydroxyethyl-, und Hydroxypropyl- und Hydroxybutylester, z.B. Hydroxyethylacrylat, Hydroxypropylacrylat, Hydroxyethylmethacrylat und Hydroxypropylmethacrylat. Derartige Monomere können in den Monomeren M in einer Menge von bis zu 10 Gew.-%, z.B. 0,1 bis 10 Gew.-%, vorzugsweise 0,5 bis 5 Gew.-%, enthalten sein;

- ethylenisch ungesättigten Nitrilen mit vorzugsweise 3 bis 10 C-Atomen wie Acrylnitril und Methacrylnitril. Derartige Monomere können in den Monomeren M in einer Menge von bis zu 30 Gew.-%, z.B. 1 bis 30 Gew.-%, vorzugsweise 5 bis 20 Gew.-%, enthalten sein;

- reaktive Monomere: Zu den reaktiven Monomeren zählen solche, die eine zur Vernetzung geeignete reaktive Funktionalität aufweisen. Hierzu zählen neben den vorgenannten ethylenisch ungesättigten Carbonsäuren, ihren N-Alkylolamiden und Hydroxyalkylestern Monomere, die eine Carbonylgruppe oder eine Epoxygruppe aufweisen, beispielsweise N-Diacetonacrylamid, N-Diacetonmethacrylamid, Acetylacetoxyethylacrylat und Acetylacetoxyethylmethacrylat, Glycidylacrylat und Glycidylmethacrylat. Derartige Monomere können in den Monomeren M in einer Menge von bis zu 10 Gew.-%, z.B. 0,5 bis 10 Gew.-% enthalten sein

- und vernetzende Monomere: Zu den vernetzenden Monomeren zählen solche, die wenigstens zwei nicht konjugierte ethylenisch ungesättigte Bindungen aufweisen, z.B. die Di- und Triacrylate bzw. -methacrylate von di- und trifunktionellen Alkoholen, z.B. Ethylenglykoldiacrylat, Diethylenglykoldiacrylat, Triethylenglykoldiacrylat, Butandioldiacrylat, Hexandioldiacrylat, Trimethylolpropantriacrylat und Tripropylenglykoldiacrylat. Derartige Monomere können in den Monomeren M in einer Menge von bis zu 2 Gew.-%, vorzugsweise nicht mehr als 1 Gew.-%, z.B. 0,01 bis 2 Gew.-%, vorzugsweise 0,01 bis 1 Gew.-%, enthalten sein. In einer bevorzugten Ausführungsform umfassen die Monomere M kein vernetzendes Monomer.

Bevorzugte Comonomere sind die monoethylenisch ungesättigten Mono- und Dicarbonsäuren mit 3 bis 10 C-Atomen, ihre Amide, ihre Hydroxy-$C_2$-$C_4$-Alkylester, ihre N-(Hydroxy-$C_1$-$C_4$-alkyl)amide sowie die vorgenannten ethylenisch ungesättigten Nitrile. Besonders bevorzugte Comonomere sind die monoethylenisch ungesättigten Mono- und Dicarbonsäuren, insbesondere Acrylsäure, Methacrylsäure und Itakonsäure.

In einer besonders bevorzugten Ausführungsform enthält die zu polymerisierende Mischung der Monomere M

- 40 bis 70 Gew.-% Styrol,
- 30 bis 59 Gew.-% Butadien und
- 1 bis 10 Gew.-% einer ethylenisch ungesättigten Mono- oder Dicarbonsäure.

In einer anderen bevorzugten Ausführungsform ist ein Teil des Styrols, vorzugsweise 5 bis 20 Gew.-%, bezogen auf die Gesamtmonomermenge, durch Acrylnitril und/oder Methacrylnitril ersetzt. In dieser bevorzugten Ausführungsform enthält die zu polymerisierende Mischung z.B.

- 30 bis 65 Gew.-% Styrol,
- 30 bis 59 Gew.-% Butadien,
- 5 bis 20 Gew.-% Acrylnitril und/oder Methacrylnitril und
- 1 bis 10 Gew.-% einer ethylenisch ungesättigten Mono- oder Dicarbonsäure.

Im Hinblick auf die Verwendung als Bindemittel in Papierstreichfarben hat es sich als vorteilhaft erwiesen, wenn

das aus der polymerisation resultierende Polymerisat eine Glasübergangstemperatur im Bereich von -20 bis +50°C und vorzugsweise im Bereich von 0 bis 30°C aufweist. Als Glasübergangstemperatur gilt hier die sogenannte mid-point-Temperatur, die nach ASTM 3418-82 mittels DSC bestimmt werden kann.

Die Glasübergangstemperatur kann über die eingesetzte Monomermischung M in bekannter Weise gesteuert werden.

Nach Fox (T.G. Fox, Bull. Am. Phys. Soc. (Ser. II) 1, 123 [1956] und Ullmanns Encyklopädie der Technischen Chemie, Weinheim (1980), S. 17, 18) gilt für die Glasübergangstemperatur von Mischpolymerisaten bei großen Molmassen in guter Nährung

$$\frac{1}{T_g} = \frac{X^1}{T_g{}^1} + \frac{X^2}{T_g{}^2} + \cdots\cdots \frac{X^n}{T_g{}^n}$$

wobei $X^1$, $X^2$, ..., $X^n$ die Massenbrüche der Monomeren 1, 2, ..., n und $T_g{}^1$, $T_g{}^2$, ..., $T_g{}^n$ die Glasübergangstemperaturen der jeweils nur aus einem der Monomeren 1, 2, ..., n aufgebauten Polymeren in Grad Kelvin bedeuten. Letztere sind z.B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed., J. Wiley, New York 1989 bekannt. Polystyrol besitzt danach eine $T_g$ von 380 K und Polybutadien eine Tg von 171 K bzw. 166 K.

Die nach dem erfindungsgemäßen Verfahren erhältlichen Polymerisate weisen in der Regel einen gewichtsmittleren Teilchendurchmesser unterhalb 1000 nm auf. Der $d_w$-Wert der Teilchengröße wird wie üblich definiert als das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wird. Die Ultrazentrifugenmessung liefert die integrale Massenverteilung des Teilchendurchmessers einer Probe. Hieraus läßt sich entnehmen, wieviele Gewichtsprozent der Teilchen einen Durchmesser gleich oder unter einer bestimmten Größe haben. Hinsichtlich der erfindungsgemäßen Verwendung in Papierstreichmassen liegt der gewichtsmittlere Teilchendurchmesser vorzugsweise unterhalb 500 nm, insbesondere unterhalb 300 nm und besonders bevorzugt im Bereich von 50 bis 300 und ganz besonders bevorzugt im Bereich von 70 bis 200 nm.

Verfahren zur Einstellung der Polymerteilchengröße einer wässrigen Polymerisatdispersion sind aus dem Stand der Technik bekannt. Vorzugsweise wird die Emulsionspolymerisation zur Einstellung einer definierten Polymerteilchengröße nach dem Saatlatexverfahren oder in Gegenwart eines in-situ hergestellten Saatlatex durchgeführt. Verfahren hierzu sind bekannt und können dem Stand der Technik entnommen werden (siehe EP-B 40419 sowie 'Encyclopedia of Polymer Science and Technology', Vol. 5, John Wiley & Sons Inc., New York 1966, S. 847).

In der Regel erweist es sich als vorteilhaft, die Emulsionspolymerisation in Gegenwart eines oder mehrerer sehr feinteiliger Polymere in Form wässriger Latices (sog. Saatlatices) durchzuführen. Vorzugsweise setzt man 0,1 bis 10 Gew.-%, vorzugsweise von 0,1 bis 5 Gew.-% und insbesondere 0,2 bis 3 Gew.-% wenigstens eines Saatlatex (Feststoffgehalt des Saatlatex, bezogen auf Gesamtmonomermenge) ein. Der Saatlatex kann teilweise oder vollständig mit den Monomeren der Polymerisationsreaktion zugeführt werden. Vorzugsweise erfolgt jedoch das Verfahren mit vorgelegtem Saatlatex (Vorlagensaat). Der Latex weist in der Regel eine gewichtsmittlere Teilchengröße von 10 bis 200 nm, vorzugsweise 20 bis 100 nm und insbesondere 20 bis 50 nm auf. Seine konstituierenden Monomere sind beispielsweise Styrol, Methylmethacrylat, n-Butylacrylat und Mischungen davon, wobei der Saatlatex in untergeordnetem Maße auch ethylenisch ungesättigte Carbonsäuren, z.B. Acrylsäure und/oder Methacrylsäure und/oder deren Amide, vorzugsweise weniger als 10 Gew.-%, bezogen auf das Gesamtgewicht der Polymerisatteilchen im Saatlatex, einpolymerisiert enthalten kann.

Bei Einsatz eines Saatlatex wird man häufig so vorgehen, dass man den Saatlatex teilweise oder vollständig, vorzugsweise zu wenigstens 80 %, im Polymerisationsgefäß vorlegt, einen Teil des Initiators, vorzugsweise in den oben angegebenen Anteilen, und gegebenenfalls einen Teil der zu polymerisierenden Monomere zugibt und auf die gewünschte Polymerisationstemperatur erwärmt. Selbstverständlich kann das Einbringen des Initiators und des Saatlatex auch in umgekehrter Reihenfolge erfolgen. Vorzugsweise erfolgt die Zugabe der Monomere erst unter Polymerisationsbedingungen. Üblicherweise enthält die Vorlage neben dem Initiator und dem Saatlatex noch Wasser und gegebenenfalls einen Teil der oberflächenaktiven Verbindungen.

In der Regel wird man einen pH-Wert von 9 während der Polymerisation nicht überschreiten. Die Kontrolle des pH-Wertes erfolgt in einfacher Weise durch Zugabe eines Neutralisationsmittels im Verlauf der Polymerisationsreaktion. Geeignet sind z.B. Basen wie Alkalihydroxid, -carbonat oder -hydrogencarbonat, wenn der pH-Wert während der Polymerisation ansteigt. Dies ist beispielsweise bei Verwendung von Peroxodisulfaten als Polymerisationsinitiatoren der Fall.

Im Anschluß an die Polymerisationsreaktion erfolgt häufig noch eine Nachpolymerisation zur Verringerung der nicht umgesetzten Monomere in der Dispersion (sog. Restmonomere). Diese Nachpolymerisation wird häufig auch als chemische Desodorierung bezeichnet. Die chemische Desodorierung erfolgt in der Regel durch radikalische Nachpolymerisation, insbesondere unter Einwirkung von Redoxinitiatorsystemen, wie sie z.B. in der DE-A 44 35 423, DE-A 44 19 518 sowie in der DE-A 44 35 422 aufgeführt sind. Bevorzugt wird die Nachpolymerisation mit einem Redoxinitiatorsystem aus wenigstens einem organischen Peroxid und einem Reduktionsmittel, vorzugsweise einem anorganischen Sulfit oder dem Salz einer α-Hydroxysulfon- bzw. -sulfinsäure (Hydrogensulfitaddukt an Carbonylverbindung) durchgeführt. Die Mengen an Initiator für die Nachpolymerisation liegen in der Regel im Bereich von 0,1 bis 5 Gew.-%, vorzugsweise im Bereich von 0,2 bis 3 Gew.-% und insbesondere im Bereich von 0,3 bis 2 Gew.-%, bezogen auf die insgesamt polymerisierten Monomere. Bei Initiatorsystemen aus mehreren Komponenten, z.B. den Redoxinitiatorsystemen, beziehen sich die Mengenangaben auf die Gesamtmenge dieser Komponenten. Die chemische Desodorierung wird vorzugsweise bei Temperaturen im Bereich von 60 bis 100°C und insbesondere im Bereich von 70 bis 95°C durchgeführt. Die für die chemische Desodorierung verwendete Initiatormenge kann in einer Portion oder über einen längeren Zeitraum kontinuierlich mit konstanter oder veränderlicher, z.B. zunehmender Zulaufrate der Dispersion zugegeben werden. Die Zeitdauer der Zugabe liegt dann in der Regel im Bereich von 10 min bis 5 h und insbesondere im Bereich von 30 min bis 4 h. Die Gesamtdauer der chemischen Nachpolymerisation liegt in der Regel im Bereich von 15 min bis 5 h und vorzugsweise im Bereich von 30 min bis 4 h.

Die nach dem erfindungsgemäßen Verfahren erhältlichen Polymerdispersionen zeichnen sich durch gute mechanische Stabilitäten und durch vergleichbar geringe Restmonomeranteile aus. Papierstreichfarben auf Basis dieser Dispersionen weisen eine sehr gute Haftung auf Papier und bessere Naßrupffestigkeiten auf. Die vorliegende Erfindung betrifft auch Papierstreichfarben, die wenigstens ein Styrol-Butadien-Copolymerisat in Form einer der erfindungsgemäßen wässrigen Polymerisatdispersionen enthalten.

Naturgemäß umfassen die Papierstreichfarben als Hauptbestandteil wenigstens ein anorganisches oder organisches Pigment. Beispiele für anorganische Pigmente sind Tonmineralien wie Kaolin, Bariumsulfat, Titandioxid, Calciumcarbonat, Satinweiß, Talk, Aluminiumhydroxid, Zinkoxid und dergleichen. Beispiele für organische Pigmente sind Polystyrol-Latices sowie Harnstoff-Formaldehydharze, die vorzugsweise ebenfalls in Form einer wässrigen Dispersion eingesetzt werden. Eine erfindungsgemäß bevorzugte Ausführungsform der Papierstreichfarben umfasst als Pigment ein Tonmineral, vorzugsweise Kaolin sowie Calciumcarbonat.

Die Menge an Bindemittel in den erfindungsgemäßen Papierstreichfarben beträgt in der Regel 3 bis 30 und vorzugsweise 5 bis 20 Gew.-Teile auf 100 Gew.-Teile Pigment. Weiterhin enthalten die erfindungsgemäßen Papierstreichfarben je 100 Gew.-Teilen Pigment in der Regel 0,1 bis 5 Gew.-Teile und vorzugsweise 1 bis 3 Gew.-Teile Hilfsstoffe. Hierzu zählen Wasserbeständigkeitsverbesserungsmittel, Dispergierhilfsmittel für die Pigmente, Viskositätsmodifizierer, Härtungsmittel, Farbpigmente, Fluoreszenzfarbstoffe, Mittel zur Einstellung des pH-Wertes sowie Cobindemittel.

Bei den Cobindemitteln handelt es sich in der Regel um wasserlösliche Polymere wie Kasein, modifiziertes Kasein, Stärke, modifizierte Stärke, Polyvinylalkohol, Carboxymethylcellulose, Polyacrylsäuren und dergleichen. Der Anteil an Cobindemittel wird in der Regel 1 Gew.-Teil, bezogen auf 100 Gew.-Teile Pigment nicht überschreiten.

Als Mittel zur Einstellung des pH-Wertes wird man in der Regel Basen, vorzugsweise anorganische Basen wie Natriumhydroxid, Kaliumhydroxid oder Calciumhydroxid verwenden. Vorzugsweise hat die Papierstreichfarbe einen pH-Wert im Bereich von 7,5 bis 9,5.

Die Herstellung der erfindungsgemäßen Papierstreichfarben erfolgt in üblicher Weise durch Vermischen der Komponenten, vorzugsweise durch Zugabe einer wässrigen Polymerdispersion, wie sie nach dem erfindungsgemäßen Verfahren erhältlich ist, zu einer wässrigen Suspension des Pigmentes, welche bereits in der Regel einen Teil oder die Gesamtmenge der erforderlichen Hilfsmittel enthält.

Die erfindungsgemäßen Papierstreichfarben führen zu Beschichtungen mit verbesserter Rupffestigkeit, insbesondere verbesserter Naßrupffestigkeit.

Die folgenden Beispiele sollen die Erfindung erläutern, ohne sie jedoch einzuschränken.

Die Bestimmung der Teilchengröße des Polymerisats erfolgte durch Lichtstreuung nach ISO 13321 mit einem Malvern Autosizer 2C an 0,01 gew.-%igen Proben. Die Lichtdurchlässigkeit wurde an 0,01 gew.-%igen Proben bei einer Küvettenlänge von 2,5 cm gegen reines Wasser als Referenz bestimmt. Die Bestimmung der Glasübergangstemperatur erfolgte mittels DSC nach der mid-point Methode.

Die Bestimmung restflüchtiger Anteile erfolgte durch gaschromatographische Analyse.

I. Herstellung der Polymerdispersionen (Beispiel 1 Vergleichsbeispiele V1 und V2)

Beispiel 1 (Dispersion D1)

In einem Polymerisationsgefäß legte man 300 g Wasser, 37 g einer 33 gew.-%igen Polymersaat ($d_{50}$ 30 nm), 3,7 g Terpinolen sowie 10% der Initiatorlösung (Zulauf 2) vor und erwärmte auf 85°C.

Dann gab man über zwei getrennte Zuläufe zeitgleich beginnend innerhalb 4,5 h die Monomeremulsion und die Restmenge der Initiatorlösung unter Beibehaltung der Temperatur in das Polymerisationsgefäß. 4 h nach Zulaufbeginn gab man 30 g Butadien innerhalb von 5 min in das Reaktionsgefäß. Nach Beendigung der Monomerzugabe kühlte man auf 70°C ab und gab dann zeitgleich beginnend eine wässrige Lösung von 4 g tert.-Butylhydroperoxid in 70 g Wasser sowie eine Lösung aus 2,5 g Aceton, 7 g einer 40 gew.-%igen, wässrigen Natriumdisulfitlösung in 67 g Wasser unter Beibehaltung der Temperatur innerhalb 2 h zu. Anschließend gab man 60 g einer 25 gew.-%igen wässrigen Natronlauge zu und kühlte auf Raumtemperatur ab.

Zulauf 1:

| | |
|---|---|
| 970 g | entionisiertes Wasser |
| 24 g | Natriumlaurylsulfat-Lösung (28 Gew.-% in Wasser) |
| 15 g | n-Dodecylmercaptan |
| 800 g | Styrol |
| 630 g | Butadien |
| 45 g | Acrylsäure |

Zulauf 2:

| | |
|---|---|
| 15 g | Natriumperoxodisulfat in 210 g Wasser |

Der Feststoffgehalt der Dispersion lag bei etwa 50 Gew.-%. Die Lichtdurchlässigkeit betrug 48%. Die gewichtsmittlere Teilchengröße $d_{50}$ lag bei 160 nm. Der pH-Wert lag bei 6,2 und die Glasübergangstemperatur Tg betrug 1°C.

Die Glasübergangstemperatur wurde mittels DSC als "mid-point" Temperatur bestimmt. Die relative Lichtdurchlässigkeit der Dispersion wurde gegenüber Wasser (100%) an 0,01 gew.-%igen Proben bei einer Küvettenlänge von 2,5 cm bestimmt. Die Bestimmung des mittleren Teilchendurchmessers erfolgte nach ISO 13321 durch quasielastische Lichtstreuung mit einem Malvern-Autosizer 2C an etwa 0,01 gew.-%igen Proben.

Beispiel 2: (Dispersion D2)

In einem Polymerisationsgefäß legte man 300 g Wasser, 37 g einer 33 gew.-%igen Polymersaat ($d_{50}$ 30 nm), 1,8 g Terpinolen sowie 10% der Initiatorlösung (wie Beispiel 1) vor und erwärmte auf 85°C.

Dann gab man über zwei getrennte Zuläufe zeitgleich beginnend innerhalb 1 h eine erste Monomeremulsion (Zulauf 1) und die Restmenge der Initiatorlösung innerhalb 4 h unter Beibehaltung der Temperatur in das Polymerisationsgefäß. Direkt nach Beendigung von Zulauf 1 gab man Zulauf 2 innerhalb von 3,5 h in den Polymerisationsreaktor. 4 h nach Beginn von Zulauf 1 gab man 30 g Butadien innerhalb von 5 min in das Reaktionsgefäß. Nach Beendigung der Monomerzugabe kühlte man auf 70°C ab und gab dann zeitgleich beginnend eine wässrige Lösung von 4 g tert.-Butylhydroperoxid in 70 g Wasser sowie eine Lösung aus 2,5 g Aceton, 7 g einer 40 gew.-%igen, wässrigen Natriumdisulfitlösung in 67 g Wasser unter Beibehaltung der Temperatur innerhalb 2 h zu. Anschließend gab man 60 g einer 25 gew.-%igen wässrigen Natronlauge zu und kühlte auf Raumtemperatur ab.

Zulauf 1:

| | |
|---|---|
| 216,0 g | entionisiertes Wasser |
| 5,3 g | Natriumlaurylsulfat-Lösung (28 Gew.-% in Wasser) |
| 3,3 g | n-Dodecylmercaptan |
| 2,0 g | Terpinolen |
| 177,8 g | Styrol |
| 140,0 g | Butadien |
| 10,0 g | Acrylsäure |

Zulauf 2:

| | |
|---|---|
| 754,0 g | entionisiertes Wasser |
| 18,7 g | Natriumlaurylsulfat-Lösung (28 Gew.-% in Wasser) |
| 11,7 g | n-Dodecylmercaptan |
| 622,2 g | Styrol |
| 490,0 g | Butadien |
| 35,0 g | Acrylsäure |

Tabelle fortgesetzt

| | |
|---|---|
| Initiatorlösung: | |
| 15 g | Natriumperoxodisulfat in 210 g Wasser |

Die erhaltene Polymerdispersion hatte einen pH-Wert von 6,2 und einen Feststoffgehalt von etwa 50 Gew.-%. Die Lichtdurchlässigkeit wurde zu 48 % bestimmt. Die gewichtsmittlere Teilchengröße $d_{50}$ lag bei 160 nm. Das Polymerisat wies eine Glasübergangstemperatur von etwa 1°C auf.

Vergleichsbeispiel 1: (Dispersion V1)

Die Polymerisation wurde analog Beispiel 1 durchgeführt mit dem Unterschied, dass weder die Vorlage noch der Monomerzulauf Terpinolen enthielt. Alle übrigen Verfahrensparameter wurden beibehalten.

Die erhaltene Polymerdispersion hatte einen pH-Wert von 6,2 und einen Feststoffgehalt von etwa 50 Gew.-%. Die Lichtdurchlässigkeit wurde zu 48 % bestimmt. Die gewichtsmittlere Teilchengröße $d_{50}$ lag bei 160 nm. Das Polymerisat wies eine Glasübergangstemperatur von etwa 1°C auf.

Vergleichsbeispiel 2: (Dispersion V2)

Die Polymerisation wurde analog Beispiel 1 durchgeführt mit dem Unterschied, dass sich die gesamte Menge an Terpinolen (3,8 g) im Zulauf der Monomere befand.

Die erhaltene Polymerdispersion hatte einen pH-Wert von 6,2 und einen Feststoffgehalt von etwa 50 Gew.-%. Die Lichtdurchlässigkeit wurde zu 48 % bestimmt. Die gewichtsmittlere Teilchengröße $d_{50}$ lag bei 160 nm. Das Polymerisat wies eine Glasübergangstemperatur von etwa 1°C auf.

Die restflüchtigen Anteile in den Dispersionen D1, D2, V1 und V2 vor physikalischer Desodorierung sind in Tabelle 1 angegeben.

Tabelle 1

| Dispersion | D1 | D2 | V1 | V2 |
|---|---|---|---|---|
| Butadien [ppm] | 110 | 190 | 100 | 320 |
| Styrol [ppm] | 800 | 700 | 370 | 3700 |
| 4-PCH [ppm] | 50 | 40 | 30 | 80 |
| VCH [ppm] | 130 | 120 | 100 | 290 |
| 4-PCH = 4-Phenylcyclohexan<br>VCH = Vinylcyclohexan | | | | |

II Anwendungstechnische Prüfung

1. Rezeptur für die Streichfarbe

| | |
|---|---|
| 64 Gew.-Teile | Wasser |
| 70 Gew.-Teile | Calciumcarbonat |
| 30 Gew.-Teile | Kaolin |
| 0,4 Gew.-Teile 0,05 Gew.-Teile | Polyacrylsäure-Natriumsalz Natriumhydroxid (als 25 gew.-%ige Lösung) |
| 0,5 Gew.-Teile | Carboxymethylcellulose |
| 20 Gew.-Teile | Polymerdispersion (50 gew.-%ig), entsprechend 10 g Polymerisat. |

Der Feststoffgehalt der Farbe lag bei 60%.

2. Herstellung und Prüfung eines beschichteten Papiers

Als Rohpapier wurde ein holzfreies Streichrohpapier mit einem Flächengewicht von 70 $g/m^2$ verwendet. Der Auftrag der Papierstreichmasse erfolgte einseitig mit 10 $g/m^2$ auf einer Laborstreichmaschine. Die Trocknung erfolgte mit einem IR-Strahler. Die Papiere passierten vor den anwendungstechnischen Prüfungen viermal einen Laborkalander (ein Walzenpaar, Liniendruck: 2000 N/cm).

Trockenrupffestigkeit

Aus den zu prüfenden Papieren wurden Streifen in der Größe 33x3 cm in Längsrichtung geschnitten und diese Streifen 15 h bei 27°C mit einer relativen Luftfeuchtigkeit von 50% im Klimaraum gelagert.
Die Streifen wurden anschließend in einem Druckwerk (IGT Bedruckbarkeitsprüfer AC2/AIC2) mit einer Standardfarbe (Druckfarbe 3808 der Fa. Lorilleux-Lefranc) bedruckt.
Die Prüfstreifen wurden mit kontinuierlich steigender Geschwindigkeit (maximale Geschwindigkeit 200 cm/s) durch das Druckwerk geführt. Als Maß für die Trockenrupffestigkeit wird die Geschwindigkeit in cm/s angegeben, bei der nach Druckbeginn 10 Ausrisse aus der Papierstreichmasse (Rupfpunkte) erfolgt sind.

Offset-Test:

Papier:

Aus den zu prüfenden Papieren werden Proben mit einer Größe von 240x46 mm in der Längsrichtung ausgeschnitten.

Durchführung der Prüfung:

Auf die Einfärbewalze wird eine entsprechende Menge der Druckfarbe gegeben und 1 min laufen gelassen. Dann wird eine Druckscheibe eingesetzt und 30 s eingefärbt.
Die Druckgeschwindigkeit beträgt 1 m/s. Ein Papierstreifen wird auf einen Druckprobeträger mit dem bedruckten Papierstreifen erneut in die Ausgangsstellung gebracht. Nach einer festgelegten Zeitspanne wird der Druckvorgang ohne Austausch der Druckscheibe erneut gestartet. Dieser Vorgang wird mehrmals wiederholt.
Nach jedem Durchgang wird das Rupfen auf der bedruckten Seite des Papierstreifens visuell begutachtet. Es wird die Anzahl der Durchgänge angegeben bis zum ersten Mal ein Rupfen auftritt. Bei sehr starkem Rupfen wird der letzte Durchgang nur als halb angegeben (z.B. starkes Rupfen nach dem 3. Durchgang wird mit 2,5 angegeben).
Streichfarbe F1 enthält Dispersion D1. Streichfarbe F2 enthält Dispersion D2, Streichfarbe VF1 enthält Dispersion V1.

Tabelle 2

| Farbe | Bindemittel | Trockenrupffestigkeit [cm/s] | Offset-Test |
|---|---|---|---|
| F1 | D1 | 88 | 5 |
| F2 | D2 | 84 | 5 |
| VF1 | V1 | 70 | 4 |

Die Daten zeigen, dass durch Verwendung von Terpinolen in Kombination mit Alkylmerkaptanen eine Verbesserung der anwendungstechnischen Eigenschaften erreicht werden kann. Eine weitere Verbesserung wird nur dann gefunden, wenn die Hauptmenge des Terpinolens sich in der Vorlage befindet.

**Patentansprüche**

1. Verfahren zur Herstellung einer wässrigen Styrol-Butadien-Polymerdispersion durch radikalische wässrige Emulsionspolymerisation einer Monomermischung M, enthaltend

    - Styrol,
    - Butadien und gegebenenfalls

- bis 30 Gew.-%, bezogen auf 100 Gew.-% Monomere, von Styrol und Butadien verschiedene ethylenisch ungesättigte Comonomere;

in einem Polymerisationsgefäß nach einem Monomerzulaufverfahren in Gegenwart eines Reglersystem, das bezogen auf 100 Gew.-% Monomere,

- 0,02 bis 0,5 Gew.-% wenigstens eines Kohlenwasserstoffs KW mit 6 bis 20 C-Atomen, der ausgewählt ist unter Verbindungen, die bei Abstraktion eines Wasserstoffatoms ein Pentadienyl- oder ein 1-Phenylallyl-Radikal bilden und $\alpha$-Methylstyrol-Dimer, sowie
- 0,3 bis 2 Gew.-% einer organischen Verbindung S mit wenigstens einer SH-Gruppe

umfasst, und das **dadurch gekennzeichnet ist, daß** man wenigstens 30 %, vorzugsweise wenigstens 50 %, insbesondere wenigstens 80 % und besonders bevorzugt die Gesamtmenge (bzw. >95 %) an Kohlenwasserstoff KW im Polymerisationsgefäß vorlegt.

**2.** Verfahren nach Anspruch 1, **dadurch gekennzeichnet, dass** man die organische Verbindung S dem Reaktionsgefäß während des Verlaufs der Polymerisation zuführt.

**3.** Verfahren nach einem der vorhergehenden Ansprüche, **dadurch gekennzeichnet, dass** die Verbindung S ausgewählt ist unter $C_4$-$C_{18}$-Alkylmercaptanen.

**4.** Verfahren nach einem der vorhergehenden Ansprüche, **dadurch gekennzeichnet, dass** der Kohlenwasserstoff KW ausgewählt ist unter Terpinolen, $\gamma$-Terpinen und $\alpha$-Methylstyrol-Dimer.

**5.** Verfahren nach einem der vorhergehenden Ansprüche, **dadurch gekennzeichnet, dass** man zu einem Zeitpunkt, wenn wenigstens 70 % der zu polymerisierenden Monomere der Polymerisationsreaktion zugeführt worden sind, die Konzentration des Butadiens im Monomerzulauf für einen Zeitraum von wenigstens 1 % der Gesamtzulaufdauer um wenigstens 10 Gew.-%, bezogen auf Monomere im Zulauf, anhebt.

**6.** Verfahren nach Anspruch 5, **dadurch gekennzeichnet, dass** die Konzentration des Butadiens im Monomerzulauf in diesem Zeitraum auf wenigstens 50 Gew.-% angehoben wird.

**7.** Verfahren nach Anspruch 5 oder 6, **dadurch gekennzeichnet, dass** man eine Monomermischung umfassend Styrol, Butadien und gegebenenfalls Monomere M3 der Polymerisationsreaktion als Monomerzulauf Mz1 zuführt und dann, wenn wenigstens 70 % des Monomerzulaufs Mz1 der Polymerisationsreaktion zugeführt worden sind, 0,5 bis 20 Gew.-% Butadien, bezogen auf die Gesamtmenge des insgesamt zu polymerisierenden Butadiens als Zulauf Mz2 parallel zum Monomerzulauf Mz1 der Polymerisationsreaktion zuführt.

**8.** Verfahren nach Anspruch 7, **dadurch gekennzeichnet, dass** man den gesamten Zulauf Mz2 innerhalb eines Zeitintervalls, das 1 bis 20 %, der Dauer von Zulauf Mz1 beträgt, zuführt.

**9.** Verfahren nach einem der vorhergehenden Ansprüche, **dadurch gekennzeichnet, dass** man die Polymerisation in Gegenwart von 0,1 bis 10 Gew.-% wenigstens eines Saat-Latex durchführt.

**10.** Verfahren nach einem der vorhergehenden Ansprüche, **dadurch gekennzeichnet, dass** die von Styrol und Butadien verschiedenen Monomere ausgewählt sind unter monoethylenisch ungesättigten Mono- und Dicarbonsäuren mit 3 bis 10 C-Atomen, deren Amiden, deren Hydroxy-$C_2$-$C_4$-alkylestern, deren N-(Hydroxy-$C_1$-$C_4$-alkyl)amiden sowie ethylenisch ungesättigten Nitrilen.

**11.** Verfahren nach einem der vorhergehenden Ansprüche, **dadurch gekennzeichnet, dass** die zu polymerisierende Monomermischung enthält:

- 40 bis 70 Gew.-% Styrol,
- 30 bis 59 Gew.-% Butadien und
- 1 bis 10 Gew.-% einer ethylenisch ungesättigten Mono- oder Dicarbonsäure.

**12.** Verfahren nach einem der Ansprüche 1 bis 6, **dadurch gekennzeichnet, dass** die zu polymerisierende Monomermischung enthält:

- 30 bis 65 Gew.-% Styrol,
- 30 bis 59 Gew.-% Butadien,
- 5 bis 20 Gew.-% Acrylnitril und/oder Methacrylnitril und
- 1 bis 10 Gew.-% einer ethylenisch ungesättigten Mono- oder Dicarbonsäure.

**13.** Wässrige Polymerdispersion, erhältlich nach einem Verfahren gemäß Anspruch 1 bis 12.

**14.** Verwendung der wässrigen Polymerdispersion nach Anspruch 13 als Bindemittel in Papierbeschichtungsstreichfarben.

**15.** Papierstreichfarben, enthaltend:

i) wenigstens ein anorganisches Pigment,
ii) 5 bis 20 Gew.-Teile wenigstens eines Styrol-Butadien-Copolymerisats in Form einer wässrigen Polymerdispersion gemäß Anspruch 13,
iii) 0,1 bis 5 Gew.-Teile übliche Hilfsmittel, jeweils bezogen auf 100 Gew.-Teile Pigment.

**Claims**

**1.** A process for preparing an aqueous styrene-butadiene polymer dispersion by free-radical aqueous emulsion polymerization of a monomer mixture M comprising

- styrene,
- butadiene, and if appropriate
- up to 30% by weight, based on 100% by weight of monomers, of ethylenically unsaturated comonomers other than styrene and butadiene;

in a polymerization vessel by a monomer feed technique in the presence of a regulator system comprising, based on 100% by weight of monomers,

- from 0.02 to 0.5% by weight of at least one hydrocarbon HC having from 6 to 20 carbon atoms, selected from compounds which on abstraction of a hydrogen atom form a pentadienyl radical or 1-phenylallyl radical, and $\alpha$-methylstyrene dimer, and
- from 0.3 to 2% by weight of an organic compound S containing at least one SH group

wherein at least 30%, preferably at least 50%, in particular at least 80%, and with particular preference the entirety (or >95%) of hydrocarbon HC is included in the initial charge to the polymerization vessel.

**2.** The process according to claim 1, wherein the organic compound S is supplied to the reaction vessel during the course of the polymerization.

**3.** The process according to either of the preceding claims, wherein the compound S is selected from $C_4$-$C_{18}$ alkyl mercaptans.

**4.** The process according to any of the preceding claims, wherein the hydrocarbon HC is selected from terpinolene, $\gamma$-terpinene and $\alpha$-methylstyrene dimer.

**5.** The process according to any of the preceding claims, wherein at a point in time when at least 70% of the monomers to be polymerized have been supplied to the polymerization reaction the concentration of butadiene in the monomer feed is raised for a period of at least 1% of the total feed duration by at least 10% by weight, based on monomers in the feed.

**6.** The process according to claim 5, wherein the concentration of butadiene in the monomer feed in this period is raised to at least 50% by weight.

**7.** The process according to claim 5 or 6, wherein a monomer mixture comprising styrene, butadiene, and, if appropriate, monomers M3 is supplied to the polymerization reaction as monomer feed Mf1 and, when at least 70% of the

monomer feed Mf1 have been supplied to the polymerization reaction, from 0.5 to 20% by weight of butadiene, based on the total amount of the total butadiene to be polymerized, is then supplied to the polymerization reaction as feed Mf2 in parallel with the monomer feed Mf1.

**8.** The process according to claim 7, wherein the entire feed Mf2 is supplied within a time interval which amounts to from 1 to 20% of the duration of feed Mf1.

**9.** The process according to any of the preceding claims, wherein the polymerization is conducted in the presence of from 0.1 to 10% by weight of at least one seed latex.

**10.** The process according to any of the preceding claims, wherein the monomers other than styrene and butadiene are selected from monoethylenically unsaturated monocarboxylic and dicarboxylic acids having from 3 to 10 carbon atoms, their amides, their $C_2$-$C_4$ hydroxyalkyl esters, their N-(hydroxy-$C_1$-$C_4$-alkyl)amides, and ethylenically unsaturated nitriles.

**11.** The process according to any of the preceding claims, wherein the monomer mixture to be polymerized comprises:

- from 40 to 70% by weight of styrene,
- from 30 to 59% by weight of butadiene, and
- from 1 to 10% of an ethylenically unsaturated monocarboxylic or dicarboxylic acid.

**12.** The process according to any of claims 1 to 6, wherein the monomer mixture to be polymerized comprises:

- from 30% to 65% by weight of styrene,
- from 30 to 59% by weight of butadiene,
- from 5 to 20% by weight of acrylonitrile and/or methacrylonitrile, and
- from 1 to 10% by weight of an ethylenically unsaturated monocarboxylic or dicarboxylic acid.

**13.** An aqueous polymer dispersion obtainable by a process according to any of claims 1 to 12.

**14.** The use of the aqueous polymer dispersion according to claim 13 as a binder in a colored paper coating slip.

**15.** A colored paper coating slip comprising:

i) at least one inorganic pigment,
ii) from 5 to 20 parts by weight of at least one styrene-butadiene copolymer in the form of an aqueous polymer dispersion according to claim 13,
iii)from 0.1 to 5 parts by weight of customary auxiliaries, based in each case on 100 parts by weight of pigment.

## Revendications

**1.** Procédé de préparation d'une dispersion aqueuse de polymère styrène-butadiène par polymérisation en émulsion aqueuse radicalaire d'un mélange de monomères M, contenant :

- du styrène,
- du butadiène et le cas échéant
- jusqu'à 30% en poids, par rapport à 100% en poids de monomères, de comonomères éthyléniquement insaturés différents du styrène et du butadiène,

dans un récipient de polymérisation selon un procédé d'amenée de monomère en présence d'un système régulateur qui comprend, par rapport à 100% en poids de monomères,

- de 0,02 à 0,5% en poids d'au moins un hydrocarbure HC avec 6 à 20 atomes de carbone, sélectionné parmi les composés qui forment par abstraction d'un atome d'hydrogène un radical pentadiényle ou 1-phénylallyle et un dimère d'$\alpha$-methylstyrène, ainsi que
- de 0,3 à 2% en poids d'un composé organique S avec au moins un groupe SH,

et qui est **caractérisé en ce qu'**on dépose d'abord au moins 30%, de préférence au moins 50%, en particulier au moins 80% et de manière particulièrement préférée la quantité totale (ou, selon le cas, >95%) d'hydrocarbure HC dans le récipient de polymérisation.

**2.** Procédé selon la revendication 1, **caractérisé en ce qu'**on amène le composé organique S au récipient réactionnel au cours de la polymérisation.

**3.** Procédé selon l'une des revendications précédentes, **caractérisé en ce que** le composé S est sélectionné parmi les $C_4$-$C_{18}$-alkylmercaptans.

**4.** Procédé selon l'une des revendications précédentes, **caractérisé en ce que** l'hydrocarbure HC est sélectionné parmi le terpinolène, le $\gamma$-terpinène et le dimère d'$\alpha$-methylstyrène.

**5.** Procédé selon l'une des revendications précédentes, **caractérisé en ce qu'**à un certain moment, lorsqu'au moins 70% des monomères à polymériser a été amené à la réaction de polymérisation, on augmente la concentration du butadiène dans l'alimentation en monomère pendant une durée représentant au moins 1% de la durée d'alimentation totale et ce, d'au moins 10% en poids, par rapport aux monomères dans l'alimentation.

**6.** Procédé selon la revendication 5, **caractérisé en ce que** la concentration du butadiène dans l'alimentation en monomère pendant ce lapse de temps est augmentée jusqu'au moins 50% en poids.

**7.** Procédé selon la revendication 5 ou 6, **caractérisé en ce qu'**on amène comme alimentation en monomère de la réaction de polymérisation Mz1 un mélange de monomères comprenant du styrène, du butadiène et le cas échéant des monomères M3, puis, lorsqu'au moins 70% de l'alimentation en monomère de la réaction de polymérisation Mz1 ont été amené, on amène 0,5 à 20% en poids de butadiène, par rapport à la quantité totale du butadiène à polymériser en totalité, comme alimentation de la réaction de polymérisation Mz2 parallèlement à l'alimentation en monomère Mz1.

**8.** Procédé selon la revendication 7, **caractérisé en ce qu'**on amène l'alimentation total Mz2 dans un intervalle de temps qui dure de 1 à 20% de la durée de l'alimentation Mz1.

**9.** Procédé selon l'une des revendications précédentes, **caractérisé en ce qu'**on effectue la polymérisation en présence de 0,1 à 10% en poids d'au moins un latex en grain.

**10.** Procédé selon l'une des revendications précédentes, **caractérisé en ce que** les monomères différents du styrène et du butadiène sont sélectionnés parmi les acides mono- et dicarboxyliques monoéthyléniquement insaturés avec 3 à 10 atomes de carbone, leurs amides, leurs hydroxy-$C_2$-$C_4$-alkylesters, leurs N-(hydroxy-$C_1$-$C_4$-alkyl)amides ainsi que leurs nitriles éthyléniquement insaturés.

**11.** Procédé selon l'une des revendications précédentes, **caractérisé en ce que** le mélange de monomères à polymériser contient :

- de 40 à 70% en poids de styrène,
- de 30 à 59% en poids de butadiène, et
- de 1 à 10% en poids d'un acide mono- ou dicarboxylique éthyléniquement insaturé.

**12.** Procédé selon l'une des revendications 1 à 6, **caractérisé en ce que** le mélange de monomères à polymériser contient :

- de 30 à 65% en poids de styrène,
- de 30 à 59% en poids de butadiène,
- de 5 à 20% en poids d'acrylonitrile et/ou de méthacrylonitrile, et
- de 1 à 10% en poids d'un acide mono- ou dicarboxylique éthyléniquement insaturé.

**13.** Dispersion aqueuse de polymère, qu'on obtient selon un procédé conforme aux revendications 1 à 12.

**14.** Utilisation de la dispersion aqueuse de polymère selon la revendication 13 comme liant dans des peintures de revêtement pour papier.

**15.** Peintures pour papier, contenant :

i) au moins un pigment inorganique,
ii) de 5 à 20 parties en poids d'au moins un copolymère styrène-butadiène sous forme d'une dispersion aqueuse de polymère selon la revendication 13,
iii) de 0,1 à 5 parties en poids d'adjuvants habituels, chaque fois sur base de 100 parties en poids de pigment.